Europäisches Patentamt

European Patent Office

Office européen des brevets

(11) Publication number: **0 464 403 A1**

# EUROPEAN PATENT APPLICATION

(21) Application number: **91109509.9**

(22) Date of filing: **10.06.91**

(51) Int. Cl.5: **G01P 3/487**

(30) Priority: **04.07.90 IT 6749190**

(43) Date of publication of application:
**08.01.92 Bulletin 92/02**

(84) Designated Contracting States:
**DE FR GB NL**

(71) Applicant: SKF INDUSTRIE S.P.A.
Corso Vittorio Emanuele II No. 48
I-10123 Torino(IT)

(72) Inventor: **Moretti, Roberto**
**Via Martiri della Libertà No.33/10**
**I-10020 Cambiano (Torino)(IT)**
Inventor: **Genero, Matteo**
**Via Samby No. 99**
**I-10021 Cambiano (Torino)(IT)**

(74) Representative: **Lotti, Giorgio**
**c/o Ing. Barzanò & Zanardo Milano S.p.A. Via**
**Cernaia 20**
**I-10122 Torino(IT)**

(54) **Device for determining the relative rotational speed between two members, such as the support members of a vehicle wheel.**

(57) A device for determining the speed between two members in relative rotation such as the supporting members of the wheel of a vehicle, in particular between the races of a rolling contact bearing substaining the wheel of a vehicle.

A first ring or screen (10), integral with the rotating race (11) of the bearing, carries a double magnetized toothed (17) ring (12) with couples of poles opposite in sign between which a magnetic sensor (13) is operatively inserted. The sensor (13) is carried by a second screen or support (14) integral with the fixed race (15) of the bearing.

Fig.1

The object of this invention is a device for allowing the gauge of the revolving speed between two members in relative rotation such as the supporting members of a vehicle's wheel.

It is known that lately the installation on vehicles of special control circuits has become very popular; these special circuits are of the kind:
- ABS, that have the aim of preventing the vehicle's wheels from blocking during the braking;
- ASR, that are meant to control the correct traction of the vehicle;
- speed gauge device, such as "speedometer";
- distance gauge devices, such as "mileometer".

The gauge systems that are actually used are realized with common basic components, such as: phonic wheel, detection sensor, local processing unit and oleodynamic shunt connection unit.

The phonic wheel is usually a toothed ring that is mounted on the rotating part to be kept under control while the sensor, may it be active or passive, is installed on the chassis facing the toothed part of the phonic ring at a prearranged distance.

The electric signals coming from the single sensors are sent to the local processing unit that gauges, in the case of ABS systems, the differences between the revolving speeds of the wheels.

The passive kind of sensors that are actually used measure the reluctance variations and need no power supply; anyway, these sensors necessarily have to be mounted outside the bearing and thus they are located in a position that is not protected from eventual crashes, polluting agents and other dangerous damages.

In particular, this sensor is negatively affected by the metallic particles due to the wear of the brakes that are located nearby the sensors and by the high temperatures that are produced by the brake disks. Moreover the sensors need a proper adjustment to be done by the user during the assembling.

The sensors are further handicapped since it is impossible to gauge revolving speeds down to 0 km/h.

It is an object of the present invention to disclose a device that allows to overcome the drawbacks of the similar actual devices.

In particular, it is an object of this invention to disclose a device for allowing the gauge of the revolving speed between two members in relative rotation such as the supporting members of the wheel of a vehicle, in particular between the races of a rolling contact bearing substaining the wheel of a vehicle, characterized in that a first ring or screen (10), integral with the rotating race (11) of the bearing, is formed by a double magnetized toothed (17) ring (12) with couples of poles opposite in sign between which a magnetic sensor (13) is operatively inserted and carried by a second screen or support (14) integral with the fixed race (15) of the bearing.

The device according to the present invention is now going to be described referring to the enclosed drawings, in which:
fig. 1　shows an example of an application of the device on a bearing;
fig. 2　is a partial perspective view of the device.

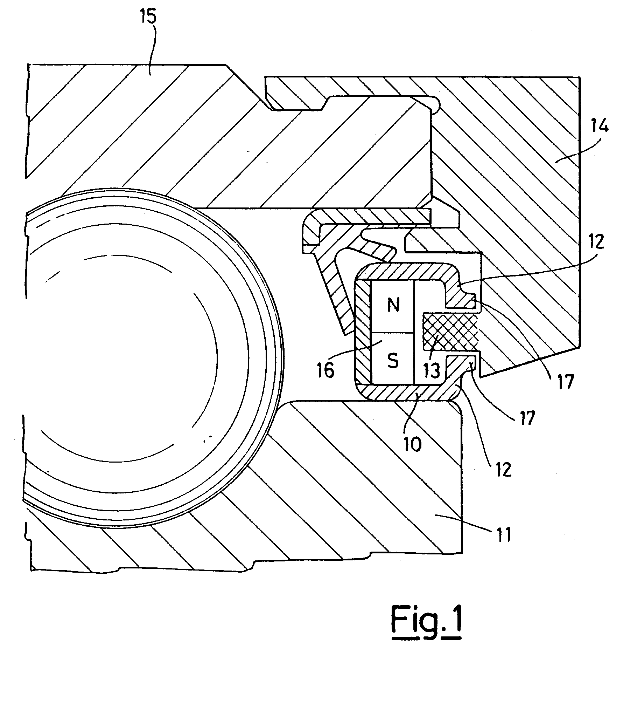

As shown in fig. 1, a rolling bearing for supporting the wheel of a vehicle has a first ring or screen 10, integral with the rotating race 11 of the bearing. The ring or screen 10 carries or extends itself in a double magnetized ring 12 with couples of poles opposite in sign.

In the example shown in the drawings the double ring 12 is magnetized by a magnet 16 that is fitted inside it; the two rings 12 could also be previously magnetized one North and one South, so that magnet 16 would not be necessary any more. The free ends of the double ring 12 are toothed in 17 with the toothings facing. A magnetic sensor 13, that can be a magnetoresistance of a Hall effect sensor, is inserted between the toothings 17 and it is carried by a second support or screen 14 integral with the fixed race 15 of the bearing.

The Hall effect magnetic sensor 13, that has integrated electronic control circuits, is power supplied with the vehicle's voltage.

The signal that is fed to the local processing unit is a function of the n variations of the magnetic field to which the sensor is exposed during a revolution of the bearing. The Hall effect sensor may be of the kind: linear, unipolar, bipolar, bipolar with memory.

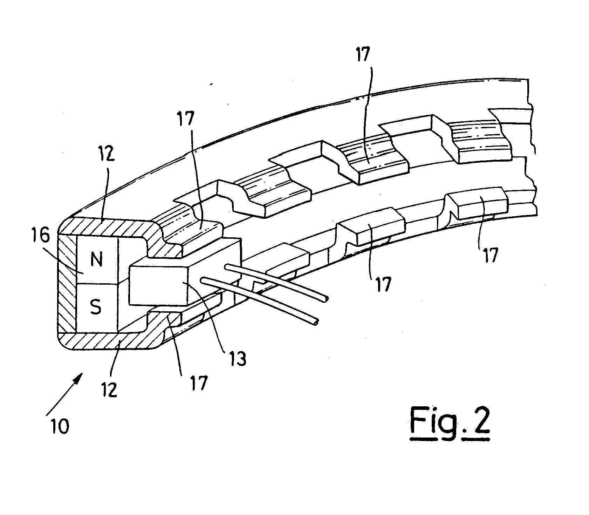

The magnetic sensor 13, is immerged in the magnetic field that is generated by the pole pieces opposite in sign and spaced by non-magnetized spaces, as shown in fig. 2; the poles are formed by the teeth 17 that are disposed alternatively with hollow spaces along the circumference of the double ring 12.

The magnet 16 can be made of rubber, filled with magnetic elements and fixed or vulcanized to a supporting ring that can also act as the closing member of the magnetic flux. The magnet 16 can otherwise be made of plastic and filled with magnetic elements, or made of magnetic sinters or even of elementar magnets.

The material of which the ring is made out of can have isotropic or anisotropic characteristics.

The rotation of the double magnetized ring 12 causes the Hall effect magnetic sensor 13 to intercept variations of the intensity of magnetic fields.

After some necessary processing, the signal having a frequency that is proportional to the speed is emitted by the electronics that are integrated with the Hall effect sensor 13, and is sent to the local processing unit.

**Claims**

1. A device for allowing the gauge of the revolving speed between two members in relative rotation such as the supporting members of the wheel of a vehicle, in particular between the races of a rolling contact bearing substaining the wheel of a vehicle, characterized in that a first ring or screen (10), integral with the rotating race (11) of the bearing, is formed by a double magnetized toothed (17) ring (12) with couples of poles opposite in sign between which a magnetic sensor (13) is operatively inserted and carried by a second screen or support (14) integral with the fixed race (15) of the bearing.

2. A device according to claim 1 wherein the configuration of the screens (10, 14) and the sensor (13) is such that the relative speed gauging members are integral with said screens and protected towards the outside.

3. A device according to claim 1 wherein the magnetic sensor (13) is a Hall effect magnetic sensor.

4. A device according to claim 1 wherein the magnetic sensor (13) is a magnetoresistance.

5. A device according to claim 1 wherein the couples of poles opposite in sign of the double magnetized ring (12) are spaced by non-magnetized spaces.

6. A device according to claim 1 wherein the double ring (12) is magnetized by a magnet (16) that is located within said double ring.

7. A device according to claim 1 wherein the double ring (12) is magnetized singly and opposite in sign with respect to the ring that it is facing.

8. A device according to claim 1 wherein the toothings (17) are facing eachother and are obtained on the free ends of the double metallic ring (12).

Fig.1

Fig.2

European
Patent Office

EUROPEAN SEARCH
REPORT

Application Number

EP 91 10 9509

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | DE-A-1 281 549 (SIEMENS)<br>* column 4, line 28 - line 42; figures 4,5 *<br>– – – | 1-3,5,8,4,6,7 | G 01 P 3/487 |
| X | GB-A-1 504 791 (POLYMOTOR ITALIANA S.P.A.)<br>* page 2, line 122 - page 3, line 37; figure 1 *<br>– – – | 1,2,7 | |
| Y,A | DE-A-2 942 873 (STANDARD ELEKTRIK LORENZ AG)<br>* page 5, paragraph 6 - page 6, paragraph 1; figure 1 *<br>– – – | 6,7,1-3,5 | |
| Y,A | EP-A-0 250 275 (S.N.R. ROULEMENTS)<br>* column 1, line 47 - line 56 * * column 2, line 27 - line 32; figure 1 *<br>– – – – – | 4,1,3,5 | |

TECHNICAL FIELDS
SEARCHED (Int. Cl.5)

G 01 P

The present search report has been drawn up for all claims

| Place of search | Date of completion of search | Examiner |
|---|---|---|
| The Hague | 08 October 91 | ROBINSON M.A. |